# EUROPEAN PATENT APPLICATION

(11) **EP 1 958 765 A1**
(43) Date of publication of application: **20.08.2008**
(21) Application number: 07102504.3
(22) Date of filing: 15.02.2007
(51) Int. Cl.: B32B 21/04, E04F 15/22, E01C 13/04

(54) **Floor for sports facilities**

(71) Applicant: Waumans, Julien, 2890 St-Amands (BE)
(72) Inventor: Waumans, Julien, 2890 St-Amands (BE)
(74) Representative: pronovem

(57) **Abstract**

The present invention is related to a floor suitable for sports halls, gymnasiums and the like. The floor complies with the technical requirements for use as a sports floor, is easy to install and comprises a metal arming giving it a high resistance. Particularly, the sports floor comprises an elastic layer (11), a first layer (12) of a pressure-spreading material (a wooden, wood-like or composite material) provided on the elastic layer, a second layer (14) of a pressure-spreading material, an arming (13) provided in between the first and the second layers and a floor covering (15). The first and second layers and the arming are preferably bonded with adhesive and may be provided in pressed panels for ease of installation. The arming is preferably a reinforcement mesh.

## Description

### Field of the Invention

The present invention is related to a floor suitable for sports halls, gymnasiums and the like. The floor complies with the technical requirements for use as a sports floor.

### State of the Art

Floors in sports halls should exhibit particular properties in order to meet the technical specifications imposed by law and to offer the sportspersons using such floors the necessary comfort for practising his or her sports activity. These properties may be: flatness, elasticity resulting in a high force reduction and a small energy loss, a high ball reflection, a high point elasticity (such that in case of a point load, the deformation is confined to a small area), shock absorption, etc. For some of these properties national or regional standards exist, which may even differ for different sports disciplines.

Therefore, sports floors of the prior art usually comprise one or more elastic layers and one or more pressure spreading layers.

Patent document EP 1008703 discloses a sports floor comprising an elastic layer and two thin steel plates of about 1 mm on top of the elastic layer. The steel plates act as a pressure spreading layer, while the properties of the elastic layer may be adjusted on demand to meet specific needs (e.g. a ballet floor being somewhat more elastic than a basketball floor).

However, the two thin steel plates are susceptible to plastic deformation when the necessary precautions are not taken. Sports halls sometimes are also used for non-sports occasions, such as concerts, parties etc., which require the mounting of platforms for seats, podiums, support structures for lighting etc. The components of these structures are transported on carts on the sports floor. These carts may be overloaded, or they may not have wheels with the required elasticity. This may lead to permanent deformation of the steel plates, and degrade the floor properties and usefulness.

Document DE 7911983U discloses a sports floor comprising a first elastic layer, particularly a point elastic layer, provided in between two wooden chip boards, and a second elastic layer underneath the chip boards. The two elastic layers have a different elasticity. The chip boards act as pressure spreading layers and as support layers for the elastic layers. These support layers may not be too thin, the boards would otherwise be very prone to rupture.

### Aims of the Invention

The present invention aims to provide a floor for sports facilities, being easy to install, having technical characteristics comparable with sports floors of the prior art, but being more resistant to permanent damage due to inappropriate use of the sports floor.

### Summary of the Invention

The invention is related to a floor, as set out in the appended claims, complying with the requirements for use in a sports hall, a gymnasium, etc. The invention is equally related to a panel, as set out in the appended claims, for use in such a floor and to a method, as set out in the appended claims, for producing said panel.

According to one aspect of the invention, there is provided a floor for sports facilities comprising: an elastic layer, a first layer provided on the elastic layer, a second layer, an arming interposed between the first layer and the second layer and a floor covering. The elastic layer is preferably made of a foam material. The first and second layers are made of a pressure-spreading material. A pressure-spreading material should be understood as a material that allows to distribute the pressure due to a point-load. It is preferably a board-like material. Preferably, the pressure-spreading material is a wooden, a wood-like or a composite material. A wood-like material is a material comprising wooden particles. Those wooden particles may be embedded in a resin or matrix or surrounded by adhesive (e.g. chip boards, MDF, HDF, etc.). Composite materials are compound materials, made from two or more constituent materials that remain separate and distinct on a macroscopic level while forming a single component.

Preferably, said arming is bonded to said first and second layers. More preferably, the arming is at least partially pressed into said first and second layers. According to a preferred embodiment of the invention, the first and second layers have equal thickness.

According to a preferred embodiment of the floor of the invention, said first layer, second layer and said arming are provided in one or more panels. Preferably, said panels comprise a groove and a tongue for sliding into the groove of an adjacent panel.

Preferably, said arming extends over the entire area of the floor. More preferably, said arming extends into the tongue of a panel.

Preferably, the first and second layer of the floor of the invention are made of plywood. Preferably, said arming comprises a reinforcement mesh.

According to a second aspect of the invention, there is provided a panel for use in a floor for sports facilities, the panel comprising: a first layer, a second layer and an arming interposed between the first layer and the second layer. The first and second layers are made of a pressure-spreading material. Preferably, the pressure-spreading material is a wooden, a wood-like or a composite material.

Preferably, said arming is bonded to said first layer and second layer. More preferably, the arming is provided in the middle of the panel's thickness. According to a preferred embodiment of the invention, the arming is at least partially pressed into said first and second layers.

According to a preferred embodiment, the panel further comprises a groove and a tongue for sliding into the groove of an adjacent panel.

Preferably, the panel comprises a floor covering. The floor covering is preferably made of wood or a synthetic material (e.g. linoleum).

Preferably, said arming extends over the entire area of said panel without tongue and groove. More preferably, said arming also extends into the tongue.

Preferably, said arming comprises a reinforcement mesh. Said reinforcement mesh is preferably made of metal. More preferably, said metal is steel.

According to a third aspect of the invention, there is provided a method of producing a panel for a floor for sports facilities, wherein the method comprises the steps of: pressing an arming in between two layers made of wood, a wood-like or a composite material in order to obtain a panel and providing the panel with a groove and a tongue. Preferably, in said pressing step, adhesive is pressed together with said arming in between said two layers.

### Brief Description of the Drawings

Fig. 1 represents a cross-section of a sports floor of the invention.

Fig. 2 represents a layout for the installation of sandwich-type panels of the invention.

Fig. 3 represents the structure of a sports floor of the invention.

### Detailed Description of the Invention

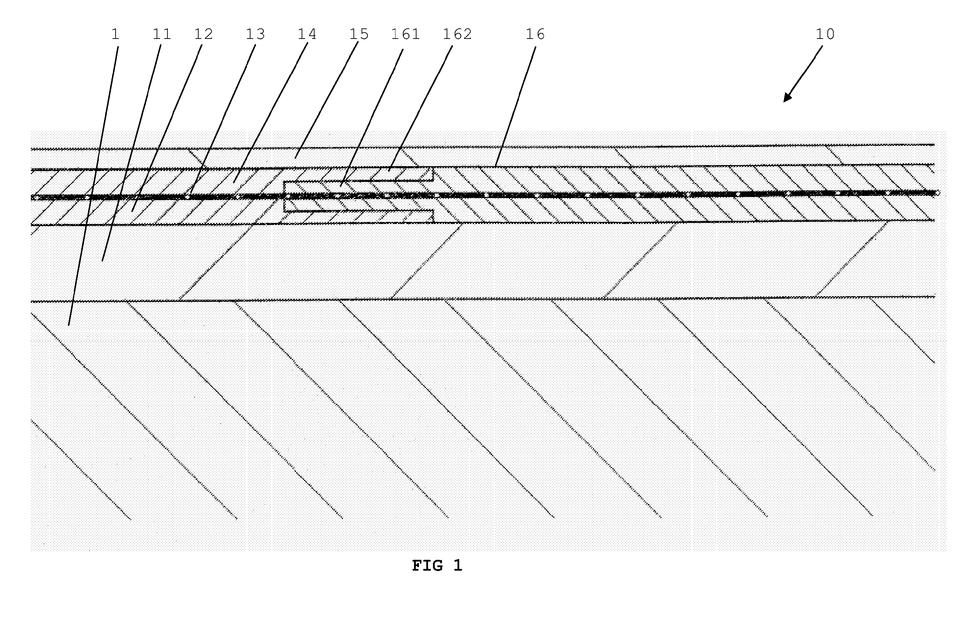

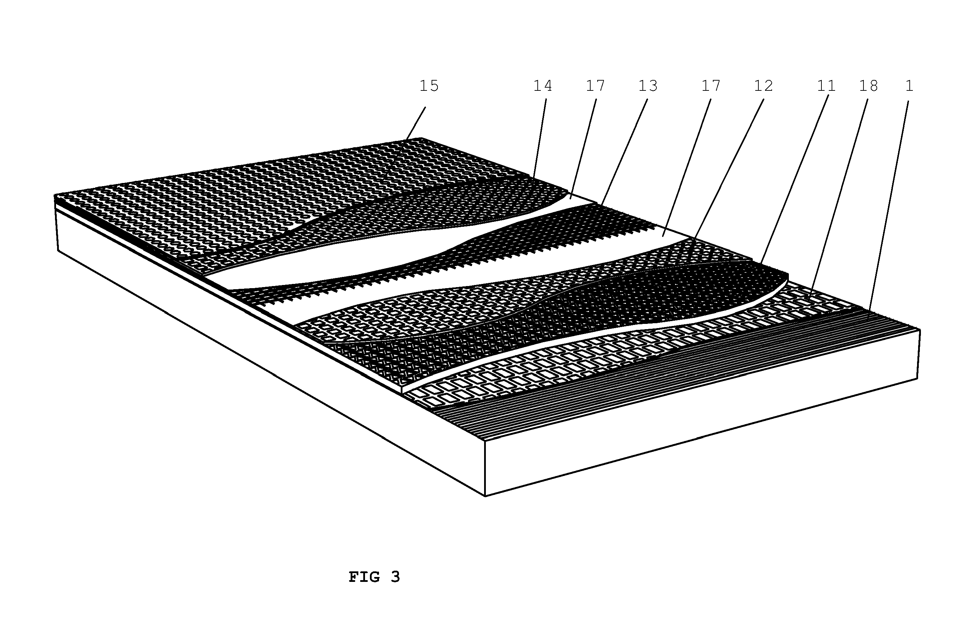

A particular embodiment of the floor for sports facilities according to the invention is represented cross-sectionally in figure 1 and in a layer-by-layer view in figure 3. The floor for sports facilities 10 (called "floor" or "sports floor" in the following) is arranged on a subfloor 1. The bottommost layer of the sports floor 10 is an elastic layer 11.

Elastic layer 11 preferably consists of a foam material with excellent point-elastic properties, such as agglomerated polyurethane (PU) foams. Agglomerated PU foams comprise flocs of PU foam which are mixed with a prepolymer and are pressed together to a predetermined density and shape (e.g. boards, panels). The elastic layer should preferably ensure that deformations of the floor caused by one sportsperson are not sensed by another sportsperson playing in the neighbourhood. The stiffness (pressure resistance) of the elastic layer is tailored in function of the use that will be made of the sports floor (e.g. for ball sports, ballet, etc.). The foam materials used for elastic layer 11 are available in different densities. For each target use of the sports floor, a different density and/or thickness of elastic layer 11 may be chosen. Preferably, the elastic layer 11 has a density of 60 kg/m³ or more.

On top of the elastic layer 11 are arranged sandwich-type panels 16. Sandwich-type panel 16 comprises three layers: a lower board 12, an upper board 14 and a metal reinforcement mesh 13 interposed between the two boards 12 and 14. The boards 12 and 14 are preferably made of wood, wooden chips or a similar material (e.g. plywood, MDF, HDF,...). Adhesive 17 is provided around the reinforcement mesh 13. The adhesive bonds the three layers of panel 16 together.

The metal mesh 13 actually acts as an arming in the panel 16, allowing to keep the panel's thickness to small values. The reinforcement mesh also allows to obtain a panel which is resistant to high point loads while maintaining its (point) elastic properties. Steel is a preferred choice for the metal mesh, e.g. galvanised steel. The metal mesh may also be replaced by a mesh of any other reinforcing material, such as carbon fibre. Armings of other types than a mesh may equally be applied. A thin panel allows the sports floor to attain a good point elasticity. The floor's flexure when a sportsperson jumps and touches ground is restricted to a small area around the person. For the case that plywood is used for the upper and lower boards and the mesh is of galvanised steel (see the example below for more details), the sports floor shows a reduced comfort (less ideal point elasticity) for panel thicknesses above about 11 mm.

The panels should preferably be manufactured in such a way so as to prevent warping phenomena. Therefore, providing the reinforcement mesh 13 in the middle of the panel 16 may be preferable. Hence, the upper and lower boards preferably have equal thickness.

Advantageously, the upper and lower boards 12 and 14 are made of plywood. Plywood is a preferred material because it has low internal stresses, which is advantageous for preventing warping phenomena, it is highly elastic and stronger than e.g. a chip board. The use of plywood allows to keep the thickness of boards 12 and 14 and hence the total thickness of panel 16 restricted to small values. Moreover, plywood has a relatively low coefficient of thermal expansion, which is advantageous for a sports floor extending over a large area. However, other materials may be used as well for the boards 12 and 14, such as other materials comprising wood, but also composite materials.

The panel 16 may be coated or impregnated with a humidity repelling material. This makes the panels suitable for outdoor use. Hence, the sports floor of the invention may be used both indoor and outdoor.

A floor covering 15, custom to the specific sports activity to be practised on the floor is provided on top of panel 16. The floor covering 15 may be linoleum, wood or any other material suitable for the practice of indoor sports activities.

The panel 16 may comprise a top finishing layer, on top of the upper board 14, such as a layer of wood finish or parquet. This top finishing layer then acts as the floor covering 15. After installation of the panels 16, the top finishing layer needs only to be polished in order for the floor to acquire its shine and to remove any unevenness in the joints between panels.

A humidity isolating sheet 18 (e.g. polyethylene foil) may be provided in between subfloor 1 and elastic layer 11. Such a humidity isolating sheet may also be provided in between elastic layer 11 and panels 16.

In order to ease the installation of the sports floor, panel 16 comprises a tongue 161 on two lateral sides and a groove 162 on the other two lateral sides. The tongue 161 is arranged to fit into a groove 162 of an adjacent panel. The metal mesh continues into tongue 161. The tongues are slid into the grooves.

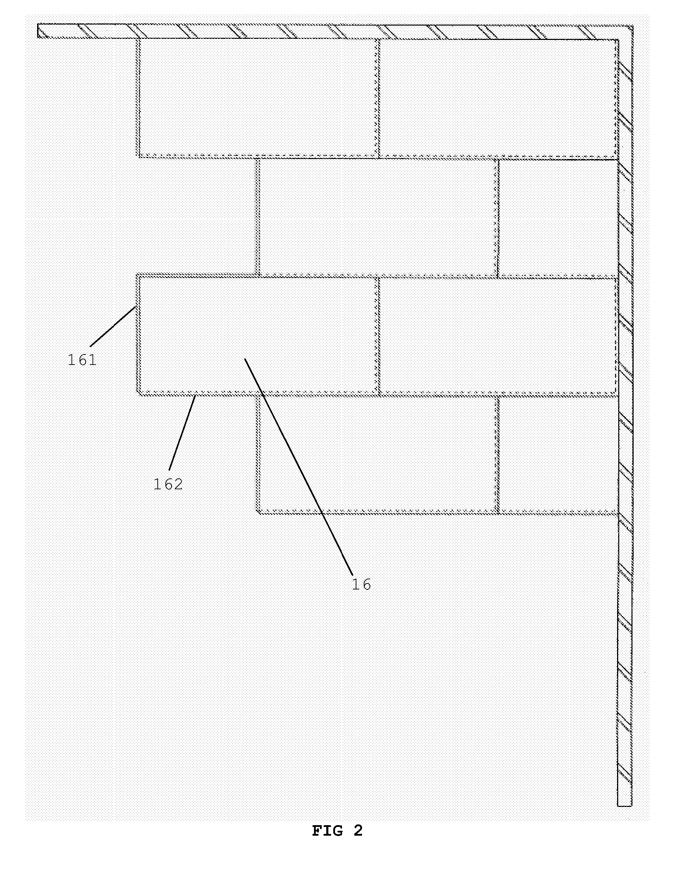

An outline of the installation of the sports floor is provided in what follows. Subfloor 1 is preferably covered with a humidity isolating foil. Next, the elastic layer 11 is installed on the foil. The foam material of the elastic layer is generally provided in panels for ease of handling. These panels have the desired thickness for the elastic layer 11 and are installed adjacent to each other on the foil. The panels of foam material may or may not be adhered to each other. The material of elastic layer 11 is generally by itself humidity resistant. Nevertheless, an isolating foil may be installed on top of elastic layer 11. Thereafter, panels 16 are installed on top. Panels 16 have a tongue 161 and groove 162. The tongue 161 of a panel is first dipped in adhesive so as to cover the whole surface of the tongue with adhesive. Next, the adhesive covered tongue is slid into the groove 162 of an adjacent panel. This way of assembly prevents the occurrence of voids in the joints between two panels. The panels may or may not be adhered to the elastic layer 11. Adherence of panels 16 to elastic layer 11 ensures that excitation of the floor by sportspersons does not cause the boards of elastic layer 11 to move (horizontally) relatively to the panels. A possible layout of panel installation is depicted in figure 2. On top of panels 16 a floor covering of e.g. linoleum may be installed according to methods known in the art.

Panel 16 is preferably pre-manufactured. The metal mesh 13 is provided in between the two boards 12 and 14 together with glue having sufficient bonding strength (e.g. two-part epoxy adhesive or polyurethane adhesive). The panel, comprising metal mesh and the two boards, is then pressed. A pressure of 4 MPa (about 40 kg/cm²) or higher is preferably applied to press the panel together. The metal mesh 13 may be partially or fully pressed into the boards 12 and 14.

Alternatively, panel 16 may be manufactured by embedding reinforcement mesh 13 in panel 16 while the boards 12 and 14 are manufactured. By way of example, reinforcement mesh 13 may be embedded in a pulp composed of particles of wood, wood substitutes or a composite material and an adhesive matrix material (e.g. a resin), pressing and curing the whole in order to obtain an armed board. The board may be provided with a tongue and a groove to obtain panel 16. Preferably, said board has the reinforcement mesh 13 in the middle.

The armed panel 16 is resistant to high point loads, such as may be loads produced by wheels of carts, feet of platforms mounted on the sports floor, etc. While sports floors of the prior art would be prone to plastic deformation under the circumstances set out above, the sports floor of the invention results to be much more resistant to permanent deformation.

### Description of a Preferred Embodiment of the Invention

By way of example, the steel mesh 13 may consist of galvanised steel rods of 1 mm diameter, arranged in a 10x10 mm mesh. The boards 12 and 14 made of plywood may be 5 mm thick. The total thickness of panel 16 thus does not exceed 11 mm in the present example. For ease of handling, panels 16 may be 1200 mm long and 600 mm wide. The tongue 161 may be 30 mm wide and have a total thickness of 3 to 4 mm (for a panel of 11 mm thickness).

The plywood boards with a thickness of 5 mm are composed of three layers of peeled wood. The topmost peeled wood layer of the upper board may be provided in parquet style. An additional floor covering is not needed in the latter case.

On a subfloor 1 an elastic layer is provided, made of agglomerated polyurethane foam. Elastic layer 11 may have a thickness of 15 mm. Panels 16 are installed on elastic layer 15. The sports floor is finished with a floor covering 15, e.g. linoleum of 4 mm thickness. The installation of a sports floor of the invention is hence easy.

Tests carried out on the sports floor as defined in the present example show the floor having characteristics comparable with characteristics of prior art sports floors.

An additional advantage of the sports floor of the invention is the acoustic isolating property. Because the panels 16 actually "float" on an elastic layer 11, there is no direct contact between the "hard" panels on which sportspersons play and the subfloor 1. Moreover, the elastic layer 11 consists of a foam material, such as an agglomerated PU foam, generally having also acoustic isolating properties. Hence, the sports floor of the invention may also be used as an acoustically isolating floor.

## Claims

1. A floor for sports facilities comprising:
- an elastic layer (11),
- a first layer (12) of a pressure-spreading material provided on the elastic layer,
- a second layer (14) of a pressure-spreading material,
- an arming (13) interposed between the first layer and the second layer and
- a floor covering (15).

2. The floor according to claim 1, wherein said first layer, second layer and said arming are provided in panels (16).

3. A panel (16) for use in a floor for sports facilities, the panel comprising:
- a first layer (12) of a pressure-spreading material,
- a second layer (14) of a pressure-spreading material and
- an arming (13) interposed between the first layer and the second layer.

4. The floor or the panel according to any one of the preceding claims, wherein said pressure-spreading material is a wooden, a wood-like or a composite material.

5. The floor or the panel according to any one of the preceding claims, wherein said arming and said first and second layers are bonded with adhesive.

6. The floor or the panel according to any one of the preceding claims, wherein the arming is at least partially pressed into said first and second layers.

7. The floor or the panel according to any one of the preceding claims, wherein said first and second layers have essentially equal thickness.

8. The floor or the panel according to any one of the claims 2 to 7, wherein the panel comprises a groove (162) and a tongue (161) for sliding into the groove of an adjacent panel.

9. The floor or the panel according to any one of the claims 2 to 8, wherein the arming is provided in the middle between the panel's upper and lower surface.

10. The floor or the panel according to any one of the preceding claims, wherein the arming comprises a reinforcement mesh.

11. A method of producing a panel (16) for a floor for sports facilities, wherein the method comprises the steps of:
- pressing an arming (13) in between two layers (12, 14) made of wood, a wood-like or a composite material in order to obtain a panel (16) and
- providing the panel with a groove (162) and a tongue (161).
